(19) **Europäisches Patentamt European Patent Office Office européen des brevets**

(11) **EP 4 104 684 A1**

(12) **EUROPEAN PATENT APPLICATION**

(43) Date of publication:
**21.12.2022 Bulletin 2022/51**

(21) Application number: **21180455.4**

(22) Date of filing: **18.06.2021**

(51) International Patent Classification (IPC):
*A23G 1/32* (2006.01)          *A23G 1/48* (2006.01)
*A23L 7/104* (2016.01)          *A23J 1/14* (2006.01)

(52) Cooperative Patent Classification (CPC):
**A23G 1/32; A23G 1/48; A23J 1/125; A23J 1/148;
A23L 7/104; A23L 7/107;** A23L 11/33

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Société des Produits Nestlé S.A.
1800 Vevey (CH)**

(72) Inventors:
• **SAGALOWICZ, Laurent
  1807 Blonay (CH)**
• **STUDER, Marianne
  1054 Morrens (CH)**
• **ROSSI (VAUTHEY), Patricia
  1071 Rivaz (CH)**
• **SOUSSAN, Elodie, Audrey
  1066 Epalinges (CH)**

• **SANDOZ, Laurence
  1040 Echallens (CH)**
• **MOCCAND, Cyril
  1132 Lully (CH)**
• **HAAS, Klara
  1004 Lausanne (CH)**
• **DE WEERT, Evelien
  1066 Epalinges (CH)**
• **CHISHOLM, Helen
  1033 Cheseaux (CH)**
• **KAMMERHOFER, Jana
  1010 Lausanne (CH)**
• **KURTZ, Teresa
  1012 Lausanne (CH)**

(74) Representative: **Lumsden, Stuart Edward Henry
  Société des Produits Nestlé S.A.
  Avenue Nestlé 55
  1800 Vevey (CH)**

(54) **A CHOCOLATE PRODUCT COMPRISING A MILK ANALOGUE PRODUCT COMPRISING CEREAL AND LEGUME**

(57)     The present invention relates to a chocolate product composition comprising at least 1.0wt% based on the weight of the chocolate product of a composition comprising a mixture of a cereal and legume, wherein said cereal comprises greater than 20.0wt% soluble dry matter based on the total weight of dry matter in the cereal and the legume comprises greater than 50wt% soluble dry matter based on the total weight of dry matter in the legume.

EP 4 104 684 A1

## Description

### Background of the invention

Some consumers do not want to consume milk because of its animal origin, or because of lactose intolerance or dairy allergies. They may also see potential environmental sustainability issues.

Alternatives to milk do exist on the market. However, they often have several disadvantages in terms of composition and protein quality. They generally use protein extracts or isolates as source of protein, have a long list of ingredients, are not clean label (e.g. comprise gellan gum, hydrocolloids, and other additives), and the taste can be unpleasant, bitter and/or astringent.

The traditional means of producing a milk substitute uses acid or basic treatment. Filtration or centrifugation may be used to remove large particles, which creates grittiness and bitterness. As a result, the efficiency of the process is low and good nutrients like dietary fibers are removed. In addition, taste is often an issue and many ingredients are added to mask off-taste. Furthermore, many constituents like flavors and protein concentrates are often used in alternative plant milks and those have artificial and non-natural connotations for the consumer.

Most prior art vegan compositions use filtering to reduce particle size which has the disadvantage of removing dietary fiber and other beneficial components from the composition.

The dairy alternative market is growing by 11% each year and finding an alternative with good nutrition and taste will be a major advantage in this competitive field.

There have been a number of patent publications seeking to provide solutions to the above-needs, as well as a number of documents relating to using plant-based ingredients to provide alternative ingredients for chocolate compositions.

WO 2020223623 uses roasted grain flour component. However, such solutions typically lead to undesirable organoleptic properties, i.e. "claggy" or pasty mouthfeel.

WO2019166700 relates to vegan chocolate based on oat and cocoa solids. Again, the inclusion of heavily ground oat-components leads to undesirable organoleptic properties.

WO2018167788 relates to vegan chocolate, primarily coconut flour but mentions numerous other plant-based components in speculative lists of possible ingredients. Such an approach is not suitable for overcoming the above-mentioned issues. Particular processing conditions are needed for each of the ingredients in an attempt to provide the desirable properties.

US4119740 relates to using peanut grit, almond shells or soybean flakes as a cocoa butter extender.

US4296141 discloses using soy protein isolate, carob and corn flour as a cocoa butter replacement

US20120294986 discloses the use of pea proteins to replace milk proteins, with the optional addition of vegetable fibres to the final product.

US9655374 highlights the issues with providing plant-based products without the need of numerous ingredients. This document discloses a confection comprising cocoa butter, an unsweetened cocoa powder, a glycerin, a coconut cream, an almond milk, a pectin, a salt, a monk fruit blend, and a coconut flour.

KR101303459 discloses the use of fermented rice, rye flour, whole wheat flour, oats, or glutinous rice in chocolate. However, again, undesirable organoleptic properties are expected.

EP3685673 discloses the use of alpha-amylase treated oats in chocolate. However, the use of the combination of single enzyme and single plant source, as well as no consideration of particle size, does not provide the required combination of product visual and textural properties.

Hence, the present invention seeks to solve the above-issues in chocolate product manufacture using at least a portion of milk ingredient replacement.

### Summary of the invention

The present invention provides a reduced dairy chocolate composition which surprisingly preserves natural goodness and avoids grittiness without discarding any nutrients, particularly dietary fibers. In addition, it leads to short ingredient list using only natural ingredients.

Accordingly, the invention relates in general to a reduced dairy chocolate product, preferably a vegan chocolate product composition comprising cereal and legume.

The present invention provides a chocolate product composition comprising at least 1.0wt% based on the weight of the chocolate product of a composition comprising a mixture of a cereal and legume, wherein said cereal comprises greater than 20.0wt% soluble dry matter based on the total weight of dry matter in the cereal and the legume comprises greater than 50wt% soluble dry matter based on the total weight of dry matter in the legume.

In one embodiment, in the chocolate product composition, said cereal and legume are present in amounts of from 15.0 to 50.0wt% cereal, and between 50.0 to 85.0wt% legume based on a combination of the cereal and legume.

In one embodiment, the chocolate product composition comprises at least 2.0wt% cereal and at least 4.0wt% legume.

In one embodiment, the cereal is oat or quinoa. In one embodiment, the legume is chickpea or lentil.

In one embodiment, the chocolate product composition further comprises oilseeds, preferably sunflower.

In one embodiment, the cereal and legume materials used in the chocolate product composition are powders.

In one embodiment, the cereal comprises between 40wt% and 95wt% soluble dry matter based on the total weight of dry matter in the cereal, preferably between 60wt% and 90wt%.

In one embodiment, the legume comprises between 60wt% and 99wt% soluble dry matter based on the total weight of dry matter in the legume, preferably between 75wt% and 98wt%.

The inventors have surprisingly found that a combination of cereal and legume can provide a milk alternative for a chocolate product composition, which is close to milk and which has the right balance between processability and organoleptic properties.

The invention also provides a method of making a chocolate product composition, preferably a vegan chocolate, comprising:

a. Mixing cereal and legume to form a mixture, the mixing occurs prior to or subsequent to the enzyme treatment step c., wherein preferably the relative weights of the cereal and legume are from 15 to 50wt% cereal, and from 50 to 85wt% legume based on a combination of the cereal and legume;

b. Adding an aqueous phase, preferably water, to the cereal and legume or the mixture of cereal and legume;

c. An enzyme treatment step, wherein each of the cereal and legume individually or the mixture thereof are treated with an amylase and preferably at least one further enzyme;

d. Optionally, a micronization step;

e. At least one homogenization step;

f. Optionally evaporating;

g. Sterilizing or pasteurizing;

h. Drying to form a plant-based composition; and

i. Combining the dry composition with other ingredients to form a chocolate product

In one embodiment, the cereal and legume in step a) are provided as a powder or a flour.

In an alternative embodiment, method step d) involving micronization is performed before method steps b) and c) involving adding aqueous phase and enzyme.

In one embodiment, the aqueous phase is water.

There is also provided a chocolate product composition made by a method according to the invention.

The present invention also provides the mixture of cereal and oat and a process for preparing said mixture.

The use enzymes of the present invention provides a lower viscosity to aid drying and processing and release sugars for sweetness and organoleptic properties. The choice of cereal and legume flours in the preferred ranges and, particularly for chickpea and oat flours, offers advantages in the colour and appearance of the final chocolate (i.e. more akin to dairy-based chocolate), taste (i.e. more akin to dairy-based chocolate) and lower viscosity of raw materials, again to aid drying and processing. The methods for dairy replacement in the art do not offer this combination of advantageous benefits.

**Detailed description**

*Definitions*

When a composition is described herein in terms of wt%, this means a mixture of the ingredients on a dry basis, unless indicated otherwise.

As used herein, "about" is understood to refer to numbers in a range of numerals, for example the range of -30% to +30% of the referenced number, or -20% to +20% of the referenced number, or -10% to +10% of the referenced number, or -5% to +5% of the referenced number, or -1% to +1% of the referenced number. All numerical ranges herein should be understood to include all integers, whole or fractions, within the range. Moreover, these numerical ranges should be construed as providing support for a claim directed to any number or subset of numbers in that range. For example, a disclosure of from 45 to 55 should be construed as supporting a range of from 46 to 54, from 48 to 52, from 49 to 51, from 49.5 to 50.5, and so forth.

As used herein, an "analogue" of a substance is considered to be a parallel of that substance in regard to one or more of its major characteristics. A "milk analogue" as used herein will parallel milk in the major characteristics of purpose, usage, and nutrition. Preferably, the milk analogue is an analogue of cow's milk.

The term "vegan" refers to an edible composition which is entirely devoid of animal products, or animal derived products. Non-limiting examples of animal products include meat, eggs, milk, and honey.

*Cereal*

A cereal is any grass cultivated (grown) for the edible components of its grain (botanically, a type of fruit called a caryopsis), composed of the endosperm, germ, and bran.

The following cereals can be used in the chocolate product composition according to the invention: oat, quinoa, maize (corn), rice, wheat, buckwheat, spelt grains, barley, sorghum, millet, rye, triticale, and fonio.

Preferably, the cereal is selected from oat, barely, corn, millet, and quinoa.

Owing to the treatment method of the present invention, said cereal comprises greater than 20.0wt% soluble dry matter based on the total weight of dry matter in the cereal.

In a preferred embodiment, the cereal comprises greater than 30.0wt% soluble dry matter based on the total weight of dry matter in the cereal, preferably greater than 40.0wt%, preferably greater than 50.0wt%, preferably greater than 60.0wt%, preferably greater than 65.0wt%, preferably greater than 70.0wt% and more preferably greater than 80.0wt%.

In a preferred embodiment, the cereal comprises less than 99.0wt% soluble dry matter based on the total weight of dry matter in the cereal, preferably less than 95.0wt%, preferably less than 92.0wt%, preferably less than 90.0wt%, preferably less than 89.0wt%, and more preferably less than 87.0wt%.

In a preferred embodiment, the cereal comprises soluble dry matter based on the total weight of dry matter in the cereal between 20.0 and 99.0wt%, preferably between 30.0 and 95.0wt%, preferably between 40.0 and 95.0wt%, preferably between 60.0 and 92.0wt%, preferably between 70.0 and 90.0wt% and more preferably between 75.0 and 89.0wt%.

The remainder of the dry matter to total 100wt% is insoluble dry matter. The soluble and insoluble dry matter contents are measured by the method set out below.

In a preferred embodiment, the D90 particle size of the cereal is less than 250 microns, is less than 200 microns, preferably less than 185 microns, preferably less than 180 microns, and more preferably less than 175 microns.

In a preferred embodiment, the D90 particle size of the cereal is greater than 25 microns, is greater than 30 microns, preferably greater than 40 microns, preferably greater than 50 microns, and more preferably greater than 60 microns.

In a preferred embodiment, the D90 particle size of the cereal is between 25 microns and 250 microns, preferably between 40 microns and 200 microns and more preferably between 60 microns and 180 microns.

In a preferred embodiment, the D50 particle size of the cereal is less than 150 microns, is less than 100 microns, preferably less than 75 microns, preferably less than 50 microns, and more preferably less than 30 microns.

In a preferred embodiment, the D50 particle size of the cereal is greater than 5 microns, is greater than 10 microns, preferably greater than 12 microns, preferably greater than 15 microns, and more preferably greater than 20 microns.

In a preferred embodiment, the D50 particle size of the cereal is between 5 microns and 150 microns, preferably between 10 microns and 100 microns and more preferably between 15 microns and 50 microns.

In a preferred embodiment, the cereal comprises soluble dry matter based on the total weight of dry matter in the cereal between 40.0 and 95.0wt%, a D90 particle size between 40 microns and 200 microns, and a D50 particle size of between 5 microns and 100 microns.

In a highly preferred embodiment, the cereal comprises soluble dry matter based on the total weight of dry matter in the cereal between 60.0 and 90.0wt%, a D90 particle size between 60 microns and 180 microns, and a D50 particle size of between 10 microns and 50 microns.

The above particle sizes are based on measurements relating to the cereal particles in isolation, i.e. not within the chocolate product. However, these particle size ranges preferably also encompass the particles when within the chocolate product. The above particle sizes are measured using the wet method described below in the examples.

In the above embodiments, the cereal is most preferably oat.

*Legume*

A legume is a plant in the family *Fabaceae* (or *Leguminosae*), the seed of such a plant (also called pulse). Legumes are grown agriculturally, primarily for human consumption, for livestock forage and silage, and as soil-enhancing green manure.

The following legumes can be used in the chocolate product composition according to the invention: lentil, chickpea, beans, and peas, for example kidney beans, navy beans, pinto beans, haricot beans, lima beans, butter beans, azuki beans, mung beans, golden gram, green gram, black gram, urad, fava beans, scarlet runner beans, rice beans, garbanzo beans, cranberry beans, green peas, snow peas, snap peas, split peas and black-eyed peas, groundnut, and Bambara groundnut.

Preferably, the legume is selected from lentil, chickpea, cow pea, fava bean (faba bean), and green pea. Preferably, the legume is lentil or chickpea. Preferably, the legume is de-hulled. Preferably, the legume is de-hulled chickpea. The legume may be roasted in certain embodiments.

Owing to the treatment method of the present invention, said legume comprises greater than 50.0wt% soluble dry matter based on the total weight of dry matter in the legume.

In a preferred embodiment, the legume comprises greater than 55.0wt% soluble dry matter based on the total weight of dry matter in the legume, preferably greater than 60.0wt%, preferably greater than 65.0wt%, preferably greater than 70.0wt%, preferably greater than 75.0wt%, preferably greater than 80.0wt% and more preferably greater than 85.0wt%.

In a preferred embodiment, the legume comprises less than 99.0wt% soluble dry matter based on the total weight of dry matter in the legume, preferably less than 98.0wt%, preferably less than 97.5wt%, preferably less than 97.0wt%, preferably less than 96.5wt%, and more preferably less than 96.0wt%.

In a preferred embodiment, the legume comprises soluble dry matter based on the total weight of dry matter in the legume between 55.0 and 99.0wt%, preferably between 65.0 and 98.0wt%, preferably between 70.0 and 97.5wt%, preferably between 75.0 and 97.0wt% and more preferably between 85.0 and 96.5wt%.

The remainder of the dry matter to total 100wt% is insoluble dry matter.

In a preferred embodiment, the D90 particle size of the legume is less than 100 microns, is less than 90 microns, preferably less than 80 microns, preferably less than 60 microns, and more preferably less than 50 microns.

In a preferred embodiment, the D90 particle size of the legume is greater than 15 microns, is greater than 20 microns, preferably greater than 25 microns, preferably greater than 30 microns, and more preferably greater than 40 microns.

In a preferred embodiment, the D90 particle size of the legume is between 15 microns and 100 microns, preferably between 20 microns and 80 microns and more preferably between 30 microns and 60 microns.

In a preferred embodiment, the D50 particle size of the legume is less than 75 microns, is less than 60 microns, preferably less than 50 microns, preferably less than 30 microns, and more preferably less than 20 microns.

In a preferred embodiment, the D50 particle size of the legume is greater than 5 microns, is greater than 7.5 microns, preferably greater than 10 microns, preferably greater than 12.5 microns, and more preferably greater than 15 microns.

In a preferred embodiment, the D50 particle size of the legume is between 5 microns and 75 microns, preferably between 10 microns and 50 microns and more preferably between 12.5 microns and 30 microns.

In a preferred embodiment, the legume comprises soluble dry matter based on the total weight of dry matter in the legume between 65.0 and 98.0wt%, a D90 particle size between 20 microns and 80 microns, and a D50 particle size of between 10 microns and 50 microns.

In a highly preferred embodiment, the legume comprises soluble dry matter based on the total weight of dry matter in the legume between 75.0 and 97.0wt%, a D90 particle size between 30 microns and 60 microns, and a D50 particle size of between 12.5 microns and 30 microns.

The above particle sizes are based on measurements relating to the legume particles in isolation, i.e. not within the chocolate product. However, these particle size ranges preferably also encompass the particles when within the chocolate product. The above particle sizes are measured using the wet method described below in the examples.

In the above embodiments, the legume is preferably chickpea.

*Combination of Cereal and Legume*

In a preferred embodiment, said cereal and legume are present in amounts of from 15.0 to 50.0wt% cereal, and from 50.0 to 85.0wt% legume based on a combination of the cereal and legume, preferably from 15.0 to 40.0wt% cereal, and from 60.0 to 85.0wt% legume based on a combination of the cereal and legume

In a more preferred embodiment, said cereal and legume are present in amounts of from 15.0 to 35.0wt% cereal, and from 65.0 to 85.0wt% legume based on a combination of the cereal and legume.

In a more preferred embodiment, said cereal and legume are present in amounts of from 20.0 to 33.0wt% cereal, and between 67.0 to 80.0wt% legume based on a combination of the cereal and legume.

In a more preferred embodiment, said cereal and legume are present in amounts of from 22.0 to 33.0wt% cereal, and between 67.0 to 78.0wt% legume based on a combination of the cereal and legume.

Owing to the treatment method of the present invention, said combination comprises greater than 50.0wt% soluble dry matter based on the total weight of dry matter in the legume.

In a preferred embodiment, the combination comprises greater than 55.0wt% soluble dry matter based on the total weight of dry matter in the combination, preferably greater than 60.0wt%, preferably greater than 65.0wt%, preferably greater than 70.0wt%, preferably greater than 75.0wt%, preferably greater than 80.0wt% and more preferably greater than 85.0wt%.

In a preferred embodiment, the combination comprises less than 99.0wt% soluble dry matter based on the total weight of dry matter in the combination, preferably less than 98.0wt%, preferably less than 97.5wt%, preferably less than 97.0wt%, preferably less than 96.0wt%, and more preferably less than 95.0wt%.

In a preferred embodiment, the combination comprises soluble dry matter based on the total weight of dry matter in the legume between 55.0 and 99.0wt%, preferably between 65.0 and 98.0wt%, preferably between 70.0 and 97.5wt%, preferably between 75.0 and 96.0wt% and more preferably between 85.0 and 95.0wt%.

The remainder of the dry matter to total 100wt% is insoluble dry matter.

In a preferred embodiment, the D90 particle size of the combination is less than 250 microns, is less than 200 microns, preferably less than 150 microns, preferably less than 100 microns or less than 75 microns.

In a preferred embodiment, the D90 particle size of the combination is greater than 20 microns, is greater than 25 microns, preferably greater than 30 microns, preferably greater than 40 microns, and more preferably greater than 50 microns.

In a preferred embodiment, the D90 particle size of the combination is between 20 microns and 250 microns, preferably between 30 microns and 150 microns and more preferably between 40 microns and 150 microns.

The above D90 particle sizes are measured using the wet method described below in the examples.

For the D90 particle sizes measured using the dry method described in the examples, the following ranges apply.

In a preferred embodiment, the D90 particle size of the combination is less than 300 microns, is less than 250 microns, preferably less than 200 microns, preferably less than 150 microns or less than 125 microns.

In a preferred embodiment, the D90 particle size of the combination is greater than 20 microns, is greater than 25 microns, preferably greater than 30 microns, preferably greater than 40 microns, and more preferably greater than 50 microns.

In a preferred embodiment, the D90 particle size of the combination is between 20 microns and 300 microns, preferably between 30 microns and 250 microns and more preferably between 40 microns and 200 microns.

In a preferred embodiment, the D50 particle size of the combination is less than 75 microns, is less than 60 microns, preferably less than 50 microns, preferably less than 40 microns, and more preferably less than 30 microns.

In a preferred embodiment, the D50 particle size of the combination is greater than 10 microns, is greater than 12.5 microns, preferably greater than 15 microns, preferably greater than 17.5 microns, and more preferably greater than 20 microns.

In a preferred embodiment, the D50 particle size of the combination is between 10 microns and 75 microns, preferably between 12.5 microns and 60 microns and more preferably between 15 microns and 50 microns.

The D50 particle sizes may be measured by either the dry method or the wet method as these values are not significantly different. However, if there is a discrepancy (i.e. one method provides a value within a range and the other does not), the wet method values are used.

In a preferred embodiment, the combination comprises soluble dry matter based on the total weight of dry matter in the combination between 65.0 and 98.0wt%, a D90 particle size between 20 microns and 150 microns (wet method), and a D50 particle size of between 10 microns and 60 microns.

In a highly preferred embodiment, the combination comprises soluble dry matter based on the total weight of dry matter in the combination between 80.0 and 97.0wt%, a D90 particle size between 30 microns and 100 microns (wet method), and a D50 particle size of between 15 microns and 50 microns.

The preferred range of dietary fiber (insoluble and soluble) in the combination used in the invention is 4wt% to 20wt%, more preferably 5wt% to 15wt%, most preferably 6wt% to 12.75wt%. The fibre content is measured using the method recited in the examples section.

The preferred range of protein in the combination (based on the weight of the combination) used in the invention is 10wt% to 40wt%, preferably 13wt% to 38wt%, preferably 16wt% to 30wt%, preferably 20wt% to 30wt% and more preferably 20wt% to 25wt%. The protein is measured using the method recited in the examples section.

The preferred range of fat content in the combination (based on the weight of the combination) used in the invention is 0wt% to 35wt%, preferably 1wt% to 35wt%, preferably 3wt% to 30wt%, and preferably between 5 to 15wt%.

The preferred range of carbohydrate content in the combination (based on the weight of the combination) used in the invention is 25wt% to 70wt%, preferably 35wt% to 65wt%, which does not include contribution from the dietary fibers of the composition.

In a highly preferred embodiment, the range of content of mono- and di-saccharides in the combination (based on the weight of the combination) used in the invention is 5.0wt% to 60wt%, preferably 10.0wt% to 55.0wt%, preferably 15.0wt% to 50.0wt%, preferably 20.0wt% to 45.0wt% and more preferably 25.0wt% to 45.0wt% and 30.0wt% to 45.0wt%.

In a preferred embodiment, the mono- and di-saccharides are the group comprising maltose, sucrose, fructose, galactose, and glucose and mixtures thereof, more preferably mixtures comprising glucose, sucrose and maltose. In a preferred embodiment, the glucose, sucrose and maltose sugars provide between 90.0wt% and 100.0wt% of the total mono- and di-saccharides, preferably between 95.0wt% and 100.0wt%.

Accordingly, a highly preferred embodiment of the invention, the combination used in the invention is 15.0 to 50.0wt% cereal, and from 50.0 to 85.0wt% legume based on a combination of the cereal and legume, the combination comprises soluble dry matter based on the total weight of dry matter in the combination between 65.0 and 98.0wt% and the range of content of mono- and di-saccharides in the combination (based on the weight of the combination) used in the invention is from 10.0wt% to 55.0wt%.

*Oilseed*

In some embodiments, the chocolate product composition may further comprises oilseeds, such as sunflower, pumpkin seed, egusi seed, sesame, rapeseed, cotton seed, grapeseed, chia seed, flaxseed, Tamarin seeds, sacha inchi seed, moringa seed, marama seeds, locust bean seeds, melon seeds, watermelon seeds, cucurbit seeds, Okra seeds, Ochro seeds, cacti seeds, cactus seeds, papaya seeds, shea nut, hemp seeds, safflower seeds, and canola seeds.
In an embodiment, the oilseed may be partially or totally defatted.
Preferably, the oilseed is selected from sunflower and sesame.
In one embodiment, oilseed is present between 10wt% to 75wt% based on the weight of the combination of cereal and legume (e.g. a mixture of 45wt% chickpea, 35wt% sunflower and 20wt% oat comprises 54wt% sunflower based on the weight of the combination), preferably between 20wt% and 60wt%.
In a further embodiment, the oil from the oilseed may be added as a liquid in or between the processing steps b. to e. In a preferred embodiment, the oil may be added prior to or subsequent to the homogenization step e., if present, preferably directly prior, during or directly subsequent to the homogenization step. In a preferred embodiment the oil is added at an amount of between 1.0wt% and 20.0wt% of the total solids, preferably between 5.0wt% and 15.0wt%.

*Confectionery Fat*

In some embodiments, the fat component from the oilseed mentioned above maybe replaced or supplemented by a fat used in confectionery production, preferably chocolate production.
In a further embodiment, the confectionery fat may be added as a liquid or solid in or between the processing steps b. to e. In a preferred embodiment, the oil may be added prior to or subsequent to the homogenization step e., if present, preferably directly prior, during or directly subsequent to the homogenization step. In a preferred embodiment the fat is added at an amount of between 1.0wt% and 20.0wt% of the total solids, preferably between 5.0wt% and 15.0wt%.
In a preferred embodiment, the fat may be cocoa butter (CB), cocoa butter equivalents (CBE), cocoa butter replacers (CBR) and/or cocoa butter substitutes (CBS)

*Particle size*

D90 (for the volume weighted distribution) is the diameter of particle, for which 90% of the volume of particles have a diameter smaller than this D90.
D50 (for the volume weighted distribution) is the diameter of particle, for which 50% of the volume of particles have a diameter smaller than this D90. The particle size distribution (weighted in volume) for a powder can be determined by automatized microscopy technique.
This may be obtained using a CamSizer (Camsizer XT Retsch) or by dispersing the particle in water using a rotor-stator and performing light scattering. For a liquid, it can be determined using light scattering. In the following text, D90 and D50 are always used for a volume weighted size distribution and describe the particle diameter. Volume weighted size distribution is very familiar for one skilled in the art.
Measurement of D4,3 (or D[4,3]) is well known to those skilled in the art as being the sum of the size to the power 4 weighted by their frequency of appearance divided by the sum of the size to the power 3 weighted by their frequency of appearance. The De Brouckere mean diameter is the mean of a particle size distribution weighted by the volume (also called volume-weighted mean diameter, volume moment mean diameter or volume-weighted mean size). It is the mean diameter, which is directly obtained in particle size measurements, where the measured signal is proportional to the volume of the particles. The most prominent examples are laser diffraction and acoustic spectroscopy (Coulter counter).
The De Brouckere mean is defined in terms of the moment-ratio system as,

$$D[4,3] = \frac{\Sigma n_i D_i^4}{\Sigma n_i D_i^3}$$

**EP 4 104 684 A1**

Where $n_i$ is the frequency of occurrence of particles in size class i, having a mean $D_i$ diameter.

Definitions

According to the present invention, the terms "chocolate product" and "chocolate analogue product" identify respectively chocolate or chocolate analogue based products (also conventionally known as "compound") as well as couverture. Chocolate and chocolate analogue products of the invention include but are not limited to: a chocolate product, a chocolate analogue product (e.g. comprising cocoa butter replacers, cocoa-butter equivalents or cocoa-butter substitutes), a chocolate coated product, a chocolate analogue coated product, a chocolate coating for biscuits, wafers or other confectionery items, a chocolate analogue coating for biscuits, wafers or other confectionery items and the like.

The term 'chocolate' as used herein denotes any product (and/or component thereof if it would be a product) that meets a legal definition of chocolate in any jurisdiction and also include product (and/or component thereof) in which all or part of the cocoa butter (CB) is replaced by cocoa butter equivalents (CBE) and/or cocoa butter replacers (CBR).

The term 'chocolate compound' as used herein (unless the context clearly indicates otherwise) denote chocolate-like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'chocolate product' as used herein denote chocolate, compound and other related materials that comprise cocoa butter (CB), cocoa butter equivalents (CBE), cocoa butter replacers (CBR) and/or cocoa butter substitutes (CBS). Thus, chocolate product includes products that are based on chocolate and/or chocolate analogues, and thus for example may be based on dark, milk or white chocolate.

In the present invention, the chocolate product composition comprises at least 1.0wt% based on the weight of the chocolate product of a composition comprising a mixture of a cereal and legume.

In a preferred embodiment, the chocolate product composition comprises at least 2.0wt% based on the weight of the chocolate product of a composition comprising a mixture of a cereal and legume, preferably at least 5.0wt% and preferably at least 10.0wt%.

In a preferred embodiment, the chocolate product composition comprises less than 50.0wt% based on the weight of the chocolate product of a composition comprising a mixture of a cereal and legume, preferably less than 40.0wt% and preferably less than 30.0wt% and preferably less than 25.0wt%.

In a preferred embodiment, the content of the mixture is between 1.0wt% and 50.0wt%, preferably between 2.0wt% and 40.0wt%, preferably between 5.0wt% and 30.0wt% and more preferably between 10.0wt% and 25.0wt% of the chocolate product.

In a preferred embodiment, the chocolate product comprises at least 1.0wt% cereal and at least 2.0wt% legume, preferably at least 2.5wt% cereal and at least 6.0wt% legume, preferably at least 3.0wt% cereal and at least 8.0wt% legume.

In a preferred embodiment, the chocolate product comprises less than 20.0wt% cereal and less than 45.0wt% legume, preferably less than 15.0wt% cereal and less than 35.0wt% legume, preferably less than 10.0wt% cereal and less than 25.0wt% legume.

In a preferred embodiment, the chocolate product comprises at least 1.0wt% cereal and at least 2.0wt% legume and less than 20.0wt% cereal and less than 45.0wt% legume, more preferably at least 3.0wt% cereal and at least 8.0wt% legume and less than 10.0wt% cereal and less than 25.0wt% legume.

In an embodiment, the chocolate product, of the present invention comprises cocoa butter (or equivalent as described above) by weight of the confectionery material in at least 5.0% by weight, preferably at least 10.0% by weight, preferably at least 13.0% by weight, more preferably at least 15.0% by weight, for example at least 17.0% or at least 20%.

The preferred maximum amount of cocoa butter (or equivalent as described above) present in the chocolate product of the present invention is less than 50.0wt% or less than 35.0% by weight, preferably not more than 30.0% by weight, more preferably not more than 30.0% by weight, and most preferably not more than 25.0% cocoa butter by weight of the chocolate product. For example, between 10.0wt% and 35.0wt% of the chocolate product.

In an embodiment, the chocolate product comprises between 0% and 95% by weight of the confectionery product of cocoa mass dependent on the end product, preferably between 0% and 85%, for example, between 45% and 80%, less than 5% or between 8% and 20% by weight of the chocolate product of cocoa mass.

Generally, the chocolate product of the present invention comprises at least 5.0wt% by weight, preferably at least 10.0% by weight, preferably at least 13.0% by weight, at least 15.0% by weight, and or at least 17.0% cocoa mass by weight of the chocolate product.

The preferred maximum amount of cocoa mass present in the chocolate product of the present invention is less than 35.0% by weight, preferably not more than 30.0% by weight, by weight, and most preferably not more than 25.0% cocoa mass by weight. For example, between 10.0wt% and 35.0wt% of the chocolate product.

If the chocolate product is a white chocolate product, the amount of cocoa mass is lower than that above,

8

preferably not present.

In an embodiment of the present invention, the chocolate product comprises a milk-based component, preferably the milk-based component is selected from the group consisting of non-fat milk solids, milk powder (optionally full cream, skimmed or semi-skimmed) and milk fat and combinations thereof. This milk-based component may be present between 0wt% and 60wt%, optionally between 10wt% and 50wt% of the chocolate product.

In an alternative embodiment of the present invention, the chocolate product does not comprise any milk-based components.

In an embodiment of the present invention, the chocolate product comprises a sweetener, preferably in an amount of between 10wt% and 80wt% or preferably 10wt% and 60wt% of the chocolate product, more preferably between 15wt% and 55wt%. In a preferred embodiment, the sugar is

In an embodiment, the present invention comprises an emulsifier, optionally at least one emulsifier. There is no particular limitation on the selection of emulsifier and any suitable compound known in the art may be used.

Examples of suitable emulsifiers include lecithin derived from plant sources and sunflower lecithin is particularly preferred. The chocolate mass according to the invention preferably contains the at least one emulsifier in an amount in a range from 0.1 to 1.0% by weight, particularly preferably in a range from 0.3 to 0.6% by weight, based on the weight of the chocolate product.

In an embodiment, the chocolate product may also comprise additional lipid components. In a preferred embodiment, the lipid component is selected from the group consisting of sunflower oil, rapeseed oil, olive oil, soybean oil, linseed oil, safflower oil, corn oil, cottonseed oil, grape seed oil, nut oils such as hazelnut oil, almond oil, walnut oil, macadamia nut oil, or other nut oil, peanut oil, rice bran oil, sesame oil, peanut oil, palm oil, palm kernel oil, coconut oil, and emerging seed oil crops such as 25 high oleic sunflower oil, high oleic rapeseed, high oleic palm, high oleic soybean oils & high stearin sunflower or combinations thereof.

Preferred vegetable oils are sunflower oil or a nut oil, with hazelnut oil and almond oil being preferred nut oils and hazelnut oil being a particularly preferred oil. The lipid component may be in the form of a paste. A preferred paste contains the above seeds, sprouts or fruits of plants or mixtures thereof in crushed, ground, crushed or chopped up form.

The amount of additional lipid components is preferably in a range from 1.0 to 15.0% by weight, particularly preferably in a range from 5.0 to 10%.0 by weight of the chocolate product.

The chocolate or chocolate analogue product may be in form of a moulded tablet, a moulded bar, an aerated product, or a coating for confectionery products, wafer, biscuits, among others. It may also have inclusions, chocolate layers, chocolate nuggets, chocolate pieces, chocolate drops. The chocolate or chocolate analogue product may further contain crispy inclusions e.g. cereals, like expanded or toasted rice or dried fruit pieces.

*Process*

The present invention provides a method of making a chocolate product composition, preferably a vegan chocolate, comprising:

> a. Mixing cereal and legume to form a mixture, the mixing occurs prior to or subsequent to the enzyme treatment step c., wherein preferably the relative weights of the cereal and legume are from 15 to 50wt% cereal, and from 50 to 85wt% legume based on a combination of the cereal and legume;
> b. Adding an aqueous phase, preferably water, to the cereal and legume or the mixture of cereal and legume;
> c. An enzyme treatment step comprising use of at least one enzyme, wherein each of the cereal and legume individually or the mixture thereof are treated with an amylase and preferably at least one further enzyme;
> d. Optionally, a micronization step;
> e. At least one homogenization step;
> f. Optionally evaporating;
> g. Sterilizing or pasteurizing;
> h. Drying to form a plant-based composition; and
> i. Combining the dry composition with other ingredients to form a chocolate product

In one embodiment, the invention relates to a method of making a chocolate product with a reduced dairy content, preferably a vegan chocolate product comprising mixing cereal and legume. The cereal is preferably quinoa or oat. The legume is preferably chickpea or lentil.

The legumes, preferably chickpeas.

The present invention preferably utilizes a plant flour in step a.

For the enzymatic treatment step, the mixture is preferably diluted in water to 2.0 to 40.0% TS (total solids), preferably between 5.0 and 35% TS, more preferably between 6.0 and 30.0% TS, to yield an aqueous composition.

In a preferred embodiment, the enzyme or mixture of enzymes is used in an amount of between 0.001% and 1.0% of the weight of the aqueous composition, preferably between 0.0015% and 0.5%, more preferably between 0.002% and 0.25%.

In a preferred embodiment, the enzyme treatment step comprises treatment with at least two enzymes, preferably between 2 and 5 enzymes, more preferably between 2 and 4 enzymes.

In a preferred embodiment, when more than one enzyme is used, the enzyme treatment steps may be sequential or concomitant. In a preferred embodiment, when more than two enzymes are used, the enzyme treatment steps may be sequential, concomitant or mixtures thereof (e.g. single enzyme treatment followed by treatment with mixture of two enzymes). In a preferred embodiment, there is no deactivation step between enzyme treatment steps. In a preferred embodiment, the enzyme treatment steps may be distinguished by temperature changes (e.g. the first enzyme treatment step may be carried out at a certain temperature, the next enzyme treatment step with a different enzyme may be carried out a lower temperature).

In a preferred embodiment, the enzyme treatment occurs at temperature between 30°C and 120°C, preferably between 35°C and 110°C, more preferably between 40°C and 100°C and most preferably between 45°C and 95°C. In a preferred embodiment, when there is more than one enzyme treatment step, all enzyme treatment steps occur within the above temperature ranges, but do not necessarily all have to occur at the same temperature.

In a preferred embodiment, at least one enzyme treatment step occurs at a temperature between 40°C and 70°C. In a preferred embodiment, at least one enzyme treatment step occurs at a temperature between 75°C and 105°C.

In a highly preferred embodiment, the process comprises at least one enzyme treatment step at a temperature between 40°C and 70°C (for example, two enzyme treatment steps) and one enzyme treatment step occurs at a temperature between 75°C and 105°C.

In an embodiment, the treatment process with an enzyme is carried out for between 1 minutes and 20 hours, between 2 minutes and 10 hours, 20 minutes and 8 hours, between 30 minutes and 6 hours, between 45 minutes and 4 hours, between 1 hour and 3 hours or between 65 minutes and 2.5 hours.

In a preferred embodiment, when there is more than one enzyme treatment step, the duration of each enzyme treatment step occurs within the above time ranges but do not necessarily all have to occur for the same duration and/or the entire treatment duration is within the above ranges.

The enzyme used may be

- alpha amylase;

- alpha amylase, beta glucanase and a protease;

- an alpha amylase having beta glucanase activity; or

- an alpha amylase having beta glucanase activity and glucosidase.

In a preferred embodiment, the amylase is an alpha-amylase.

In a preferred embodiment, an additional enzyme is selected from:

protease;
glucosidase, preferably amyloglucosidase;
glucoamylase;
glucanase, preferably a beta glucanase
and mixtures thereof.

Highly preferred enzyme combinations are:

amylase and glucosidase;

amylase and protease;

amylase and glucanase;

amylase, glucosidase, glucanase and protease; or

amylase, glucanase and protease.

Specific preferred embodiments of the above are:

alpha amylase and amyloglucosidase;

alpha amylase and protease;

alpha amylase and beta glucanase;

alpha amylase, amyloglucosidase, beta glucanase and protease; or

alpha amylase, beta glucanase and protease.

Amylase (EC 3.2.1.1) is an enzyme classified as a saccharidase: an enzyme that cleaves polysaccharides. It is mainly a constituent of pancreatic juice and saliva, needed for the breakdown of long-chain carbohydrates such as starch, into smaller units. Amyloglucosidase (EC 3.2.1.3) is an enzyme able to release glucose residues from starch, maltodextrins and maltose by hydrolysing glucose units from the non-reducing end of the polysaccharide chain. The sweetness of the preparation increases with the increasing concentration of released glucose. Proteases are enzymes allowing the hydrolysis of proteins. They may be used to decrease the viscosity of the hydrolyzed whole grain composition. Alcalase 2.4 L (EC 3.4.21.62), from Novozymes is an example of a suitable enzyme. Glucanases (EC 3.2.1) are enzymes that break down a glucan, a polysaccharide made of several glucose sub-units. As they perform hydrolysis of the glucosidic bond, they are hydrolases. β-1,3-glucanase, an enzyme that breaks down β-1,3-glucans such as callose or curdlan. β-1,6 glucanase, an enzyme that breaks down β-1,6-glucans. Cellulase, an enzyme that perform the hydrolysis of 1,4-beta-D-glucosidic linkages in cellulose, lichenin and cereal β-D-glucans. Xyloglucan-specific endo-beta-1,4-glucanase. Xyloglucan-specific exo-beta-1,4-glucanase.

In a preferred embodiment, the cereal is treated with an enzyme mixture comprising alpha amylase and glucanase and the legume treated with a mixture of alpha amylase, amyloglucosidase and protease.

In a preferred embodiment, the enzyme or mixture of enzymes is used in an amount of between 0. 010% and 10% of the weight of the substrate, preferably between 0.02% and 5%, more preferably between 0.02% and 1.0%.

In a preferred embodiment, if the enzyme treatment is on a mixture, the substrate is the combination of cereal and legume and any oilseed that is optionally present. Alternatively, if the cereal and legume are treated individually, the substrate is the cereal or legume and any oilseed that is optionally present

In a preferred embodiment, the amount of each individual amylase, preferably alpha-amylase, used is in an amount of between 0.010% and 2.5% of the weight of the substrate, preferably between 0.015% and 1.0%, more preferably between 0.020% and 0.5%.

In a preferred embodiment, the amount of each individual protease is in an amount of between 0.020% and 2.0% of the weight of the substrate, preferably between 0.025% and 1.0%, more preferably between 0.03% and 0. 50% and more preferably between 0.03% and 0.10%.

In a preferred embodiment, the amount of each individual glucosidase, preferably amyloglucosidase, is present in an amount of between 0.1% and 5.0% of the weight of the substrate, preferably between 0.20% and 2.5%, more preferably between 0.25% and 1.5% and more preferably between 0.30% and 1.0%.

In a preferred embodiment, the amount of each individual glucanase, preferably beta glucanase, is present in an amount of between 0.01% and 2.0% of the weight of the substrate, preferably between 0.015% and 1.0%, more preferably between 0.017% and 0.5% and more preferably between 0.020% and 0. 2%.

Highly preferred enzyme combinations are:

amylase between 0.010% and 2.5% of the weight of the substrate and glucosidase in an amount of between 0.1% and 5.0% of the weight of the substrate;

amylase between 0.010% and 2.5% of the weight of the substrate and protease in an amount of between 0.020% and 2.0% of the weight of the substrate;

amylase between 0.010% and 2.5% of the weight of the substrate and glucanase in an amount of between 0.01% and 2.0% of the weight of the substrate;

amylase between 0.010% and 2.5% of the weight of the substrate, glucosidase in an amount of between 0.1% and 5.0% of the weight of the substrate, glucanase in an amount of between 0.01% and 2.0% of the weight of the substrate and protease in an amount of between 0.020% and 2.0% of the weight of the substrate; or

amylase between 0.010% and 2.5% of the weight of the substrate, glucanase in an amount of between 0.01% and 2.0% of the weight of the substrate and protease in an amount of between 0.020% and 2.0% of the weight of the substrate

In a preferred embodiment, to prepare the starting materials, the mixture or the cereal and legume individually can be subjected to ball milling, homogenization, for example valve homogenization, to get a D90 lower than 400 microns, preferably lower than 300 microns, preferably lower than 200 microns, more preferably lower than 100 microns or 80 microns. These particle sizes are measured by the wet method disclosed below.

In one embodiment, in step d., micronization is performed to reduce the particle size so that the D4,3 is lower than 100 microns, preferably lower than 75 microns, preferably lower than 50 microns, preferably lower than 40 microns. These particle sizes are measured by the wet method disclosed below.

In one embodiment, in step d., micronization is performed to reduce the particle size so that the D90 is lower than 300 microns, preferably lower than 200 microns, preferably lower than 150 microns, preferably lower than 100 microns, preferably lower than 80 microns. These particle sizes are measured by the wet method disclosed below.

In one embodiment, in step d., micronization is performed to reduce the particle size so that the D50 is lower than 60 microns, preferably lower than 50 microns, preferably between 25 to 50 microns. These particle sizes are measured by the wet method disclosed below.

Micronization may be performed by Hammer mill, Colloidal mill, Stirred media mill, Bead mill, Jet mill, Ball mill, Pin mill, Roller grinder, Roller refiner, Impact mill, Stone mill, Cryogenic milling, Rod mill, Vibratory mill, or by Cutting mill.

Preferably, micronization is performed using a Hammer mill, Colloidal mill

The homogenization step comprises at least one homogenization step. In a preferred embodiment, there are two homogenization steps. At least one of the homogenization steps is carried out, preferably, at a pressure of between 200 bar and 500 bar, preferably between 250 bar and 350 bar. In a further embodiment, the further homogenization step is carried out between 25 bar and 100 bar, preferably between 30 bar and 75 bar.

Preferably, the homogenization includes valve homogenization, micro-fluidization or ultrasonic homogenization.

The process of enzyme deactivation is not particularly limited. For example, the deactivation step may be carried out at greater than 135°C for at least 5 seconds or at least 10 seconds.

In the embodiment where concentration is present, the concentration is carried out by known methods, e.g. evaporation, to preferably reach a target viscosity and/or total solids content. For example, the total solids may be within the range of 15% to 60%, preferably 20% to 50%. For example, the target viscosity of 80 mPa s to 120 mPa s, preferably 100 mPa s (60°C and 600 1/s, as measured using the method specified below).

In the above embodiment, the sterilization or pasteurisation step relates to treatment at high temperatures (typically 120°C to 160°C) for a very short period (typically no more than 200 seconds and optionally typically more than 50 seconds) to deactivate any microbial contaminants to make the ingredient safe for human consumption. Alternatively, different temperatures may be used, for example, 60°C to 100°C, and different times, for example 60 to 500 seconds. The thermal treatment step is not particularly limited, as long as pasteurisation occurs without product degradation.

In one embodiment, drying is performed by spray drying, roller drying, belt drying, vacuum belt drying, spray freezing, spray chilling, ray drying, oven drying, convection drying, microwave drying, freeze drying, pulsed electric field assisted drying, ultrasound assisted drying, fluid bed drying, ring drying, vortex drying, or IR drying (radiation).

In a preferred embodiment, drying is performed by spray drying, roller dryer, belt drying, or vacuum belt drying.

The present invention will now be described with reference to the non-limiting examples below.

## EXAMPLES

### Example 1: Chickpea and oat - Alpha-amylase

Chickpeas were supplied by Zwickie (Switzerland). Chickpea de-hulling was carried out using Laboratory shelling Machine (F.H. SCHULE Mühlenbau GmbH, Germany) for 90 s and at 90% of maximum speed.

The chickpeas were then roasted using a Salvis combisteam CSC furnace (Germany) operating at 160°C for 40 minutes. 65% Chickpea grains were mixed with 35% oat seeds (Demeter). The size of the particles was reduced by Hammer milling operating at speed 2 with 12 knifes and grid size 0.5mm (Retsch ZM1, Switzerland). 30% of this mixture was mixed with 70% water. To further reduce the grain size, the mixture was passed in a colloid mill (Ika Labor Pilot) having a gap of 50 microns. The dispersion was then diluted in water to have 12% of solid matter. The mixture was heated under agitation for 15 minutes at 90°C, followed by cooling down to 80°C. 0.0025wt%, in reference to total dispersion weight, of Ban 800 (Novozymes, Denmark) was added, where the main active component is the enzyme alpha amylase. The temperature was maintained at 80°C and agitation was carried out for 15 minutes. The dispersion was then heated at 122°C for 3 minutes to deactivate the enzymes. The protein composition was determined by the Dumas method with a conversion factor of 6.25. The lipid composition was determined by acid hydrolysis. The composition of nutrients in weight % on a dry basis was as follows: protein: 15%, fat: 6,5%, fibre: 13% and carbohydrate (except fiber): 60%. The particle size was determined using a Malvern 3000 instrument using the Mie model with stirrer speed 2000, material name: protein, refractive index 1.54, particle density 1.2 and absorption index 0.01, dispersant was water and corresponding refractive index 1.33. Result is the average of 5 measurements. D4,3 was 34 microns, D90 was found to be 82 microns while the D50 was 20 microns.

Viscosity of the preparation at 25 % TS

The viscosity was measured in a modular compact rheometer (Anton PAAR, Graz) with a concentrical cylinder system at a temperature of 60 °C.

100 1/s: 1138,3 ± 1,7 mPa*s

600 1/s: 342,6 ± 0,4 mPa*s

TS limit for spray drying at 60 °C: 20.4 %

As can be seen from the subsequent examples, the use of multiple enzyme treatment offers further advantages in viscosity control, which provides additional benefits in drying ease and processing for chocolate manufacture.

Particle size:

Wet method: Particle size in water was measured with a Mastersizer 2000 (Malvern instruments Ltd., United Kingdom), using laser diffraction. Samples were dispersed in a Hydro 2000 G water dispersion unit (Malvern instruments Ltd., United Kingdom) at room temperature. Characteristic particle size $d_{10}$, $d_{50}$ and $d_{90}$ are calculated from normalized curves, corresponding to the particle size of 10%, 50% and 90% of the particles respectively.

Dry method: Particle size of powders was measured by Camsizer XT (Retsch Technology GmbH, Germany). The technique of digital image analysis is based on the computer processing of a large number of sample's pictures taken at a frame rate of 277 images/seconds by two different cameras, simultaneously. Characteristic particle size $d_{10}$, $d_{50}$ and $d_{90}$ are calculated from normalized curves, corresponding to the particle size of 10%, 50% and 90% of the particles respectively.

| Particle size | D10 [$\mu$m] | D50 [$\mu$m] | D90 [$\mu$m] | D4,3 [$\mu$m] |
|---|---|---|---|---|
| Wet, before drying | 3.2 | 27.5 | 103 | 53.3 |
| Dry, Powder | 9.9 | 30.4 | 120.2 | 65.6 |

**Example 2: Chickpea/sunflower/oat powder with amylase, beta-glucanase & protease**

Chickpea flour (69%) and oat flour (31%) were mixed into water (40°C) at a total solids content of 7.8%. The dispersion was then introduced into a Tetra Almix B200-100 VA Scanima reactor (Germany) and heated to 60°C. Defatted sunflower flour (35%) was added to the chickpea/oat mix (65%) leading to a total solids content of 12%.The starch degrading enzyme alpha-amylase (Termamyl Classic, Novozymes, Denmark) was added at a quantity of 0.006 wt.%, in reference to total dispersion mass (including sunflower). The mixture was heated under agitation to 90°C and kept at this temperature for 4 minutes, followed by cooling down to 56°C. At 56°C defatted sunflower flour (35%) and the enzyme beta-glucanase (Viscozyme L, Novozymes, Denmark) for beta-glucan degradation at a quantity of 0.002 wt.%, in reference to total dispersion mass, was added and the incubation time was 20 minutes. Afterwards, the protein hydrolysing enzyme protease (PROTIN SD-NY10, Amano, Japan) was added at a concentration of 0.005 wt.%, in reference to total dispersion mass, and the incubation time was another 20 minutes. For enzyme inactivation the dispersion was treated by ultra-high temperature using a temperature of 143°C for 5 seconds (APV, HTST, Germany). For further refining, the obtained dispersion was passed through a colloidal mill (Process pilot 2000-4 IKA-Werke in Colloidal milling configuration) having a gap of 50 microns and two homogenization passes (APV, HTST, Germany) using pressure of 300/50 Bars. The liquid was concentrated to reach a target viscosity of 100 mPa s (60°C and 600 1/s). The concentrate was dried using a Niro spray dryer (model SD-6.3N, GEA). The liquid was atomized by means of a bifluid nozzle and the inlet air temperature entered the drying chamber at 140°C. The enzymatic treatments were strategies to decrease the viscosity in order to allow a more efficient spray drying process.

Viscosity of the preparation at 25 % TS.

Method: The viscosity was measured in a modular compact rheometer (Anton PAAR, Graz) with a concentrical cylinder system at a temperature of 60 °C.

Results:

100 1/s: 436.1 ± 13.1

600 1/s: 137.6 ± 1.8

TS limit for spray drying at 60 °C: 23.6 %

Particle size:

Wet method: Particle size in water was measured with a Mastersizer 2000 (Malvern instruments Ltd., United Kingdom), using laser diffraction. Samples were dispersed in a Hydro 2000 G water dispersion unit (Malvern instruments Ltd., United Kingdom) at room. Characteristic particle size $d_{10}$, $d_{50}$ and $d_{90}$ are calculated from normalized curves, corresponding to the particle size of 10%, 50% and 90% of the particles respectively.

Dry method: Particle size of powders was measured by Camsizer XT (Retsch Technology GmbH, Germany). The technique of digital image analysis is based on the computer processing of a large number of sample's pictures taken at a frame rate of 277 images/seconds by two different cameras, simultaneously. Characteristic particle size $d_{10}$, $d_{50}$ and $d_{90}$ are calculated from normalized curves, corresponding to the particle size of 10%, 50% and 90% of the particles respectively.

| Particle size | D10 [$\mu$m] | D50 [$\mu$m] | D90 [$\mu$m] | D4,3 [$\mu$m] |
|---|---|---|---|---|
| Wet; before drying | 2.0 | 35.5 | 125 | 96.4 |
| Dry, Powder | 10.1 | 31.3 | 185.9 | 88.4 |

**Example 3: Chickpea/sunflower/oat powder with amylase, beta-glucanase & protease**

Chickpea flour (69%) and oat flour (31%) were mixed into water (40°C) at a total solids content of 7.8%. The dispersion was then introduced into a Tetra Almix B200-100 VA Scanima reactor (Germany) and heated to 60°C. The starch degrading enzyme alpha-amylase (Termamyl Classic, Novozymes, Denmark) was added at a quantity of 0.006 wt.%, in reference to total dispersion mass (including sunflower). The mixture was heated under agitation to 90°C and kept at this temperature for 4 minutes, followed by cooling down to 56°C. At 56°C the enzyme beta-glucanase Viscozyme L, Novozymes, Denmark) for beta-glucan degradation at a quantity of 0.002 wt.%, in reference to total dispersion mass (including sunflower), was added and the incubation time was 20 minutes. Afterwards, the protein hydrolysing enzyme protease (PROTIN SD-NY10, Amano, Japan) was added at a concentration of 0.005 wt.%, in reference to total dispersion mass (including sunflower), and the incubation time was another 20 minutes. For enzyme inactivation the dispersion was treated by ultra high temperature using a temperature of 143°C for 5 seconds (APV, HTST, Germany). After enzyme inactivation, defatted sunflower flour (35%) was added to the chickpea/oat mix (65%) leading to a total solids content of 12%. For further refining, the obtained dispersion was passed through a colloidal mill (Process pilot 2000-4 IKA-Werke in Colloidal milling configuration) having a gap of 50 microns and two homogenization passes (APV, HTST, Germany) using pressure of 300/50 Bars. The liquid was concentrated to reach a target viscosity of 100 mPa s (60°C and 600 1/s). The concentrate was dried using a Niro spray dryer (model SD-6.3N, GEA). The liquid was atomized by means of a bifluid nozzle and the inlet air temperature entered the drying chamber at 140°C. The enzymatic treatments and addition of sunflower after UHT treatment were strategies to decrease the viscosity in order to allow a more efficient spray drying process.

Viscosity:

The viscosity was measured in a modular compact rheometer (Anton PAAR, Graz) with a concentrical cylinder system at a temperature of 60 °C.

Results:

100 1/s: 193 $\pm$ 0 mPa*s

600 1/s: 65 $\pm$ 0 mPa*s

TS limit for spray drying at 60 °C: 28.8 %

Particle size:

Wet method: Particle size dispersed in water was measured with a Mastersizer 2000 (Malvern instruments Ltd., United Kingdom), using laser diffraction. Samples were dispersed in a Hydro 2000 G water dispersion unit (Malvern instruments Ltd., United Kingdom) at room temperature. Characteristic particle size $d_{10}$, $d_{50}$ and $d_{90}$ are calculated from normalized curves, corresponding to the particle size of 10%, 50% and 90% of the particles respectively.

Dry method:

Particle size of powders was measured by Camsizer XT (Retsch Technology GmbH, Germany). The technique of digital image analysis is based on the computer processing of a large number of sample's pictures taken at a frame rate of 277 images/seconds by two different cameras, simultaneously. Characteristic particle size $d_{10}$, $d_{50}$ and $d_{90}$ are calculated from normalized curves, corresponding to the particle size of 10%, 50% and 90% of the particles respectively.

| Particle size | D10 [$\mu$m] | D50 [$\mu$m] | D90 [$\mu$m] | D4,3 [$\mu$m] |
|---|---|---|---|---|
| Wet; before drying | 2.1 | 36.0 | 139.0 | 103.0 |
| Dry, Powder | 14.3 | 50.2 | 247.9 | 95.7 |

**Example 4: Chickpea, sunflower, and oat powder with amylase and glucosidase treatment**

Chickpeas were sourced from Vivien Paille (France). Chickpea de-hulling was carried out using shelling Machine (F.H. SCHULE Mühlenbau GmbH, Germany) for 100s and at 90% of maximum speed. The chickpeas were then roasted using a Salvid combisteam CSC furnace (Germany) operating at 160°C for 40 minutes. 45% chickpea was mixed with 35wt% (partially) defatted sunflower flour (Heliaflor 45, Austrade, Germany) and 20% oat grains. The premix was treated in a hammer milling (Retsch ZM1, Switzerland) operating at speed 2 with 12 knifes and grid size of 0.5 mm in order to produce a homogeneous premix. 12% of the obtained mixture was mixed with 88% of water. The dispersion was then introduced into a Tetra Almix B200-100 VA Scanima reactor (Germany). The mixture was heated under agitation for 15 minutes at 90°C, followed by cooling down to 80°C. 0.003wt%, in reference to the total mass, of Ban 800 (Novozymes, Denmark) which contains the enzyme alpha amylase as active component was added. The temperature was kept at 80°C and agitation was carried out for 15 minutes. After cooling the mixture to 65°C, 0.04wt%, in reference to the total mass, of AMG300 (Novozymes, Denmark) with amyloglucosidase as active component was added. The enzymatic treatment was carried out under agitation at 65°C for 1 hour. For further refining, the obtained dispersion was passed through a colloidal mill (Process pilot 2000-4 IKA-Werke in Colloidal milling configuration) having a gap of 50 microns and two homogenization passes (APV, HTST, Germany) using pressure of 300/50 Bars. For enzyme inactivation the dispersion was treated by ultra high temperature using a temperature of 143°C for 5 seconds (APV, HTST, Germany). In order to obtain a powder the dispersion was dried using a Niro spray dryer (model SD-6.3N, GEA). The liquid was atomized by means of a bifluid nozzle and the inlet air temperature entered the drying chamber at 140°C.

Viscosity:

The viscosity was measured in a modular compact rheometer (Anton PAAR, Graz) with a concentrical cylinder system at a temperature of 60 °C.

Results:

100 1/s: 217.4 $\pm$ 16.4 mPa*s

600 1/s: 114.2 $\pm$ 5.8 mPa*s

TS limit for spray drying at 60 °C: 24.9 mPas

| Particle size | D10 [μm] | D50 [μm] | D90 [μm] | D4,3 [μm] |
|---|---|---|---|---|
| Wet; before drying | | 24 | 85 | 37 |
| Dry, Powder | 8.5 | 24.8 | 59 | 42 |

**Example 5: Chickpea/sunflower/oat powder with amylase treatment**

Chickpeas were sourced from Vivien Paille (France). Chickpea de-hulling was carried out using shelling Machine (F.H. SCHULE Mühlenbau GmbH, Germany) for 100s and at 90% of maximum speed. The chickpeas were then roasted using a Salvid combisteam CSC furnace (Germany) operating at 160°C for 40 minutes. 45% chickpea was mixed with 35wt% (partially) defatted sunflower flour (Heliaflor 45, Austrade, Germany) and 20% oat grains. The premix was treated in a hammer milling (Retsch ZM1, Switzerland) operating at speed 2 with 12 knifes and grid size of 0.5 mm in order to produce a homogeneous premix. 12% of the obtained mixture was mixed with 88% of water. The dispersion was then introduced into a Tetra Almix B200-100 VA Scanima reactor (Germany). The mixture was heated under agitation for 15 minutes at 90°C, followed by cooling down to 80°C. 0.003wt%, in reference to the total mass, of Ban 800 (Novozymes, Denmark) which contains the enzyme alpha amylase as active component was added. The temperature was kept at 80°C and agitation was carried out for 15 minutes. For further refining, the obtained dispersion was passed through a colloidal mill (Process pilot 2000-4 IKA-Werke in Colloidal milling configuration) having a gap of 50 microns and two homogenization steps (APV, HTST, Germany) using pressure of 300/50 Bars. For enzyme inactivation the dispersion was treated by ultra high temperature using a temperature of 143°C for 5 seconds (APV, HTST, Germany). The liquid was concentrated to reach a target viscosity of 100 mPa s (60°C and 600 1/s). In order to obtain a powder, the dispersion was dried using a Niro spray dryer (model SD-6.3N, GEA). The liquid was atomized by means of a bifluid nozzle and the inlet air temperature entered the drying chamber at 140°C.

Viscosity of the preparation at 25 % TS

The viscosity was measured in a modular compact rheometer (Anton PAAR, Graz) with a concentrical cylinder system at a temperature of 60 °C.

100 1/s: 1138,3 ± 1,7 mPa*s

600 1/s: 342,6 ± 0,4 mPa*s

TS limit for spray drying at 60 °C: 20.4 %

Particle size:

Wet method: Particle size in water was measured with a Mastersizer 2000 (Malvern instruments Ltd., United Kingdom), using laser diffraction. Samples were dispersed in a Hydro 2000 G water dispersion unit (Malvern instruments Ltd., United Kingdom) at room temperature. Characteristic particle size $d_{10}$, $d_{50}$ and $d_{90}$ are calculated from normalized curves, corresponding to the particle size of 10%, 50% and 90% of the particles respectively. $D_{4,3}$ is the volume moment mean diameter.

Dry method:

Particle size of powders was measured by Camsizer XT (Retsch Technology GmbH, Germany). The technique of digital image analysis is based on the computer processing of a large number of sample's pictures taken at a frame rate of 277 images/seconds by two different cameras, simultaneously. Characteristic particle size $d_{10}$, $d_{50}$ and $d_{90}$ are calculated from normalized curves, corresponding to the particle size of 10%, 50% and 90% of the particles respectively. $D_{4,3}$ is the volume moment mean diameter.

| Particle size | D10 [μm] | D50 [μm] | D90 [μm] | D43 [μm] |
|---|---|---|---|---|
| Wet; before drying | 3.2 | 27.5 | 103 | 53.3 |

(continued)

| Particle size | D10 [μm] | D50 [μm] | D90 [μm] | D43 [μm] |
|---|---|---|---|---|
| Dry, Powder | 9.9 | 30.4 | 120.2 | 65.6 |

**Example 6: Chickpea/sunflower/oat powder with amylase and glucosidase treatment**

Chickpeas were sourced from Vivien Paille (France).

Chickpea de-hulling was carried out using shelling Machine (F.H. SCHULE Mühlenbau GmbH, Germany) for 100s and at 90% of maximum speed. The chickpeas were then roasted using a Salvid combisteam CSC furnace (Germany) operating at 160°C for 40 minutes. 45% chickpea was mixed with 35wt% (partially) defatted sunflower flour (Heliaflor 45, Austrade, Germany) and 20% oat grains. The premix was treated in a hammer milling (Retsch ZM1, Switzerland) operating at speed 2 with 12 knifes and grid size of 0.5 mm in order to produce a homogeneous premix. 12% of the obtained mixture was mixed with 88% of water. The dispersion was then introduced into a Tetra Almix B200-100 VA Scanima reactor (Germany). The mixture was heated under agitation for 15 minutes at 90°C, followed by cooling down to 80°C. 0.003wt%, in reference to the total mass, of Ban 800 (Novozymes, Denmark) which contains the enzyme alpha amylase as active component was added. The temperature was kept at 80°C and agitation was carried out for 15 minutes. After cooling the mixture to 65°C, 0.04wt%, in reference to the total mass, of AMG300 (Novozymes, Denmark) with amyloglucosidase as active component was added. The enzymatic treatment was carried out under agitation at 65°C for 1 hour. For further refining, the obtained dispersion was passed through a colloidal mill (Process pilot 2000-4 IKA-Werke in Colloidal milling configuration) having a gap of 50 microns and two homogenization passes (APV, HTST, Germany) using pressure of 300/50 Bars. For enzyme inactivation the dispersion was treated by ultra-high temperature using a temperature of 143°C for 5 seconds (APV, HTST, Germany). In order to obtain a powder, the dispersion was dried using a Niro spray dryer (model SD-6.3N, GEA). The liquid was atomized by means of a bifluid nozzle and the inlet air temperature entered the drying chamber at 140°C.

Viscosity:

The viscosity was measured in a modular compact rheometer (Anton PAAR, Graz) with a concentrical cylinder system at a temperature of 60 °C.

Results:

[0214]

　　100 1/s: 217.4 ± 16.4 mPa*s

　　600 1/s: 114.2 ± 5.8 mPa*s

　　TS limit for spray drying at 60 °C: 24.9 mPas

| Particle size | D10 [μm] | D50 [μm] | D90 [μm] | D43 [μm] |
|---|---|---|---|---|
| Dry, Powder | 8.5 | 24.8 | 59 | 42 |

**Example 7**

The oat and chickpea flours of Examples 9 and 10 were analysed and compared against untreated comparative examples.

| Sample Name | Soluble dry matter | Insoluble dry matter | D50 [μm] | D90 [μm] |
|---|---|---|---|---|
| Oat flour untreated | 9% | 91% | 394 | 1030 |
| Oat flour treated | 85% | 15% | 21.3 | 163 |
| Chickpea flour untreated | 43% | 57% | 16.1 | 60.5 |

(continued)

| Sample Name | Soluble dry matter | Insoluble dry matter | D50 [μm] | D90 [μm] |
|---|---|---|---|---|
| Chickpea flour treated | 95% | 5% | 17.5 | 43.6 |
| Chickpea-Oat treated combination | 90% | 10% | 25.1 | 62.4 |
| Chickpea-Oat - treated combination emulsion | 93% | 7% | 27.4 | 67.8 |

The mixtures contained 76wt% chickpea and 24wt% oat. The particle size was measured by the wet method specified above.

The Soluble dry matter is defined as the percentage of dry matter in the supernatant after a centrifugation at 2500 rpm.

Soluble dry matter:

Soluble dry matter was measured by dispersing powder in demineralized water at 10% TS and mixing the solution at 500 rpm for 60 minutes using a magnetic stirrer to achieve complete powder hydration. Dry matter of solution was measured using thermogravimetric analysis (TGA) (Mettler Toledo TGA/DSC 1 STAR$^e$ System). 10 ml of hydrated solution were centrifuged in 15 ml graded centrifugal tube at 2500 rpm for 10 min (Hettich Zentrifugen Rotina 46 R). Dry matter of supernatant was measured using TGA.

Soluble dry matter is calculated as follows:

$$soluble\ dry\ matter\ (\%) = \left(\frac{w2}{w1}\right) * 100$$

w1 = dry matter of solution

w2 = dry matter of supernatant

This method is used to define the corresponding features used in the present invention.

## Example 8

The compositions below were analysed to provide the below compositional information.

Fibers: Duplicate test portions of dried foods undergo sequential enzymatic digestion by heat stable a-amylase, protease, and amyloglycosidase to remove starch and protein. For total dietary fiber (TDF), enzyme digestate is treated with alcohol to precipitate soluble dietary fiber before filtering, and TDF residue is washed with alcohol and acetone, dried, and weighed. TDF residue values are corrected for protein by kjeldahl, ash, and blank. This method was used in all examples where fibre was measured.

Protein: Rapid mineralization of the sample which transforms organically bound nitrogen to ammonium sulfate. Release of ammonia by addition of sodium hydroxide. Steam distillation and collection of the distillate in boric acid solution. Acidimetric titration with ammonium. Samples are tested "as-is" and not dried first.

Sugars: Extraction of sugars in water using sonication and injection on the HPAEC-PAD system. Neutral sugars being weak acids are partially ionized at high pH and can be separated by anion-exchange chromatography on a base stable polymeric column. Sugars are detected by measuring the electrical current generated by their oxidation at the surface of a gold electrode and quantified by comparison with an external standard.

Moisture: Drying in a vacuum or air oven under the conditions prescribed in the product method: test portion, drying time, and temperature. For certain products, preliminary predrying of the product with (or without) sand or celite is required. Total solids is the gravimetric determination of the residue weight loss after drying the product under the prescribed temperature and time conditions. Moisture is obtained by subtracting the percent solids from 100.

| Sample | Enzyme Treatment | Chickpea /wt% | Oat /wt% | Protein /wt% | Sugars /wt% | | | | Fat /wt% | Fibres /wt% | | | Water /wt% |
|---|---|---|---|---|---|---|---|---|---|---|---|---|---|
| | | | | | Glucose | Sucrose | Maltose | Total | | insoluble | soluble | total | |
| Chickpea oat powder treated | Protease (Alcalase), termamyl classic, AMG and beta-glucanase | 76 | 24 | 20.63 | 21.1 | 2.49 | 13.04 | 36.78 | 7.44 | 6.3 | 6.3 | 12.6 | |
| Chickpea flour | 0 | 100 | | 22.25 | 0 | 3.25 | 0 | 3.25 | 5.95 | 7.43 | 0 | 7.43 | 6.06 |
| Oat flour | 0 | | 100 | 15.68 | 0 | 1.1 | 0 | 1.1 | 6.72 | 6.03 | 2.14 | 8.17 | 9.35 |
| Chickpea powder treated | Termamyl classic, AMG, and protease (SDNY-10) | 100 | | 23.01 | 24.52 | 3.02 | 10.58 | 38.13 | 5.88 | 6.51 | 0.69 | 7.21 | 3.72 |

19

**Example 9 - Separate Enzyme Treatment**

Mixing chickpea or oat flour with water at 25%TS at 60°C. Oat treatment: 1. add 0.02%, in reference to the total mass, Amylase (Termamyl Classic) and heat to 80°C, 2. incubation at 80°C for 4min, 3. cool to 56°C and add 0.02% glucanase, in reference to the total mass, 4. incubation for 60 min at 56°C

Chickpea treatment: 1. cool to 50°C and add 0.025%, in reference to the total mass, protease (Alcalase), 2. incubation for 15 min at 50°C, 3. add 0.02% alpha-Amylase (Termamyl Classic), in reference to the total mass and heat to 90°C, 4. incubation at 90°C for 4min, 5. cool to 56°C and add 0.125%, in reference to the total mass, Amyloglucosidase (AMG), and 6. incubation for 60 min at 56°C

UHT (enzyme deactivation): T= 143°C 5sec Flash; cool down to 60°C. Micronization with Colloidal mill with stone mill module (gap. 50$\mu$m): 1 pass at 11000 rpm; 60°C. Homogenization: 300bars/50bars; 60°C; 2 passages. Concentration with spinning cone evaporator to 40%TS (60°C). Pasteurization at 75°C for 5 min. The liquid was then spray dried at 60°C, with a T-in 150 °C, T-out 80 °C, spray rate of 15 l/h using a bi-fluid nozzle.

**Example 10 - Combined Enzyme Treatment**

Mixing chickpea and oat flours (75:25) with water at 25%TS at 60°C. The enzyme treatment:
1. cool to 50°C and add 0.01%, in reference to the total mass, protease (Alcalase), 2. incubation for 15 min at 50°C, 3. add 0.02%, in reference to the total mass, Amylase (Termamyl Classic) and heat to 90°C, 4. incubation at 90°C for 4min, 5. cool to 56°C and add 0,02%, in reference to the total mass, Glucanase and add 0,125%, in reference to the total mass, Amyloglucosidase (AMG), 6. incubation for 60 min at 56°C. UHT (enzyme deactivation) is carried out a T= 143°C 5sec Flash; cool down to 60°C. Micronization with a Colloidal mill with stone mill module (gap. 50$\mu$m) and 1 pass at 11000 rpm; 60°C. Homogenization: 300bars/50bars; 60°C. Subsequently, addition of sunflower oil, 10% of TS and a high shear treatment to pre-emulsify. Homogenization: is carried out at 300bars/50bars; 60°C and followed by concentration with spinning cone evaporator to 40%TS (60°C). Pasteurization is carried out at 75°C for 5 min. The liquid was then spray dried at 60°C, with a T-in 150 °C, T-out 80 °C, spray rate of 15 l/h using a bi-fluid nozzle.

**Example 11**

Chocolate was made using a standard production process based on the following recipes.

| Chocolate Recipe | Reference | Plant-based chocolate of the invention |
| --- | --- | --- |
| Sucrose | 46.13% | 46.13% |
| Plant powder | 0.00% | 15.55% |
| skimmed milk powder | 15.55% | 0% |
| milk fat | 3.92% | 3.92% |
| cocoa butter | 20.33% | 20.33% |
| cocoa mass | 13.61% | 13.61% |
| sunflower lecithin | 0.44% | 0.44% |
| vanilin | 0.02% | 0.02% |

An informal tasting was carried out as an initial assessment of these recipes and it was found that the present invention provided a chocolate that was surprisingly close to the milk-based reference in respect of texture and taste.

**Example 12**

Chocolate was made using a standard production process based on the following recipes - the mixture of Example 10 was used and a variant where the powder was freeze dried.

| Recipe Chocolate Chickpea/Oat powders | Chickpea Oat Spray Dry Recipe | Chickpea Oat Freeze Dry Recipe |
| --- | --- | --- |
| Ingredients | % | % |
| Cocoa liquor | 14 | 14 |

(continued)

| Recipe Chocolate Chickpea/Oat powders | Chickpea Oat Spray Dry Recipe | Chickpea Oat Freeze Dry Recipe |
|---|---|---|
| Ingredients | % | % |
| Sugar | 49 | 49 |
| CO powder Spray Dry | 10 | |
| CO powder Freeze dry | | 10 |
| Cocoa Butter | 21.53 | 21.53 |
| Liquid oil HOSO | 5 | 5 |
| Sunflower lecithin | 0.45 | 0.45 |
| Vanilla | 0.02 | 0.02 |

| Dairy Milk Chocolate Reference | % |
|---|---|
| Cocoa liquor | 14 |
| Sugar | 49 |
| Skimmed milk powder | 10 |
| Cocoa Butter | 21.53 |
| Liquid oil HOSO | 5 |
| Sunflower lecithin | 0.45 |
| Vanilla | 0.02 |

The Degree of Difference (0 to 10 scale) of the tested sample compared to the reference sample (milk chocolate). Used for global perception and for flavour and texture and compared with reference (-3 to +3 scale) between the vegan chocolates versus reference to identify the attributes impacted (hard, gritty, dry, intensity, cocoa, dairy, off notes, sweet, acid, bitter). The Globally, the vegan chocolates were close to milk chocolate reference (8.2 for spray drying and 6.3 for freeze drying). Chickpea/Oat based chocolate with spray-drying process is the closest to milk chocolate. The texture was deemed close to milk chocolate for both samples (7.5, 7.4) with the spraying drying being closer on flavour. The textural results of the present invention show that a surprising advantage is provided by the products and processes of the present invention as it is typically the failure to provide an acceptable texture that highlights the problems with milk alternatives.

**Example 13 (Comparative)**

Chocolate was prepared using the individual flours of Example 9 and compared to a reference milk chocolate and assessed using a formal tasting procedure with a panel of 12 panelists. Statistically significant differences were found for overall aroma, vanilla, caramel, biscuit, cardboardy and off notes.

The chickpea sample was found to display statistically significantly increased flavour off notes and "cardboardy" texture. The chickpea sample was also lacking in vanilla and biscuit. The oat sample was lacking in "caramel" and "biscuit" notes, as well as being more "cardboardy" than the reference sample. Both the chickpea and the oat were lacking in overall aroma intensity.

Accordingly, the mixture of the present invention differed from a reference sample in fewer statistically significant ways than the individual components from a reference sample.

**Claims**

1. A chocolate product composition comprising at least 1.0wt% based on the weight of the chocolate product of a composition comprising a mixture of a cereal and legume, wherein said cereal comprises greater than 20.0wt% soluble dry matter based on the total weight of dry matter in the cereal and the legume comprises greater than 50wt% soluble dry matter based on the total weight of dry matter in the legume.

2. The chocolate product composition according to claim 1, wherein said cereal and legume are present in amounts of from 15.0 to 50.0wt% cereal, and between 50.0 to 85.0wt% legume based on a combination of the cereal and legume.

3. The chocolate product composition according to claims 1 and 2, wherein the chocolate product comprises at least 2.0wt% cereal and at least 4.0wt% legume.

4. The chocolate product composition according to claims 1 to 3, wherein said cereal and legume are present in amounts of from 15 to 35wt% cereal, and between 65 to 85wt% legume based on a combination of the cereal and legume.

5. The chocolate product composition according to claims 1 to 4, wherein the cereal is oat or quinoa.

6. The chocolate product composition according to claims 1 to 5, wherein the legume is chickpea or lentil.

7. The chocolate product composition according to claims 1 to 6, comprising between 5.0wt% and 30.0wt% of the combination of cereal and legume and the cereal and legume are present in amounts of from 20 to 35wt% cereal, and between 65 to 80wt% legume based on a combination of the cereal and legume.

8. The chocolate product composition according to claims 1 to 7, further comprising oilseed, preferably sunflower.

9. The chocolate product composition according to claims 1 to 8, wherein the D90 particle size of the both of the cereal and legume is less than 250 microns, preferably less than 200 microns, and preferably less than 175 microns.

10. The chocolate product composition according to claims 1 to 9, wherein the cereal comprises between 40wt% and 95wt% soluble dry matter based on the total weight of dry matter in the cereal, preferably between 60wt% and 90wt%.

11. The chocolate product composition according to claims 1 to 10, wherein the legume comprises between 60wt% and 99wt% soluble dry matter based on the total weight of dry matter in the legume, preferably between 75wt% and 98wt%.

12. The chocolate product composition according to claims 1 to 11 comprising:

a sweetener in an amount of between 10wt% and 60wt% based on the chocolate product,
cocoa butter or an equivalent in an amount of less than 35.0% by weight based on the chocolate product, and
a cocoa mass in an amount of less than 35.0% by weight based on the chocolate product.

13. A method of making a chocolate product composition, preferably a vegan chocolate, comprising:

a. Mixing cereal and legume to form a mixture, the mixing occurs prior to or subsequent to the enzyme treatment step c., preferably wherein the relative weights of the cereal and legume are from 15 to 50wt% cereal, and from 50 to 85wt% legume based on a combination of the cereal and legume;
b. Adding an aqueous phase, preferably water, to the cereal and legume or the mixture of cereal and legume;
c. An enzyme treatment step, wherein each of the cereal and legume individually or the mixture thereof are treated with an amylase and preferably at least one further enzyme;
d. Optionally, a micronization step;
e. At least one homogenization step;
f. Optionally evaporating;
g. Sterilizing or pasteurizing;
h. Drying to form a plant-based composition; and
i. Combining the dry composition with other ingredients to form a chocolate product

14. A method according to claim 13, wherein the cereal is quinoa or oat.

15. A method according to claims 13 and 14, wherein the legume is chickpea or lentil.

16. A method according to claims 13 to 15, wherein the enzyme treatment comprises treatment with an alpha amylase in combination with an enzyme selected from the group consisting of protease, amyloglucosidase, glucoamylase, and beta glucanase and mixtures thereof.

17. A method according to claim 16, wherein the enzyme treatment step is carried out using at least one of a combination selected from:

    a. alpha-amylase, amyloglucosidase, beta-glucanase,
    b. alpha-amylase, protease and amyloglucosidase,
    c. alpha-amylase, amyloglucosidase, beta-glucanase and protease, and
    d. alpha-amylase and amyloglucosidase.

18. A chocolate product composition made by the method of claims 12 to 17.

19. A mixture of a cereal and legume, wherein said cereal comprises greater than 20.0wt% soluble dry matter based on the total weight of dry matter in the cereal and the legume comprises greater than 50wt% soluble dry matter based on the total weight of dry matter in the legume.

20. The mixture according to claim 19, wherein said cereal and legume are present in amounts of from 15 to 35wt% cereal, and between 65 to 85wt% legume based on a combination of the cereal and legume.

21. The mixture according to claim 19 or claim 20, wherein the cereal is oat or quinoa and/or wherein the legume is chickpea or lentil.

22. The mixture according to any of claims 19 to 21, comprising between 5.0wt% and 30.0wt% of the combination of cereal and legume and the cereal and legume are present in amounts of from 20 to 35wt% cereal, and between 65 to 80wt% legume based on a combination of the cereal and legume.

23. The mixture according to any of claims 19 to 22, further comprising oilseed, preferably sunflower.

24. The mixture according to any of claims 19 to 23, wherein the D90 particle size of the both of the cereal and legume is less than 250 microns, preferably less than 200 microns, and preferably less than 175 microns.

25. A method of making a mixture of cereal and legume, comprising:

    a. Mixing cereal and legume to form a mixture, the mixing occurs prior to or subsequent to the enzyme treatment step c., preferably wherein the relative weights of the cereal and legume are from 15 to 50wt% cereal, and from 50 to 85wt% legume based on a combination of the cereal and legume;
    b. Adding an aqueous phase, preferably water, to the cereal and legume or the mixture of cereal and legume;
    c. An enzyme treatment step, wherein each of the cereal and legume individually or the mixture thereof are treated with an amylase and preferably at least one further enzyme;
    d. Optionally, a micronization step;
    e. At least one homogenization step;
    f. Optionally evaporating;
    g. Sterilizing or pasteurizing; and
    h. Drying to form a plant-based composition.

Europäisches
Patentamt

European
Patent Office

Office européen
des brevets

**EUROPEAN SEARCH REPORT**

Application Number

EP 21 18 0455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/127358 A1 (NESTLE SA [CH]) 25 June 2020 (2020-06-25) * claims; examples * | 19-25 | INV. A23G1/32 A23G1/48 A23L7/104 |
| X | EP 1 208 752 A1 (NESTLE SA [CH]) 29 May 2002 (2002-05-29) * paragraphs [0013], [0014]; claims; examples * | 19-22,25 | A23J1/14 |
| X,D | WO 2018/167788 A1 (PANDA VEGAN PRODUCTS LTD [IL]) 20 September 2018 (2018-09-20) * page 4, lines 15-19; claims; examples * * page 3, lines 23-30 * | 1-25 | |
| X | WO 2018/206622 A1 (PURATOS [BE]) 15 November 2018 (2018-11-15) * page 4, lines 17-18; claims; examples * * page 7, line 31 - page 8, line 4 * | 1-25 | |

TECHNICAL FIELDS SEARCHED (IPC)

A23G
A23L
A23J

The present search report has been drawn up for all claims

| Place of search | Date of completion of the search | Examiner |
|---|---|---|
| The Hague | 15 November 2021 | Bondar, Daniela |

## ANNEX TO THE EUROPEAN SEARCH REPORT
## ON EUROPEAN PATENT APPLICATION NO.

EP 21 18 0455

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2021

| Patent document cited in search report | | Publication date | Patent family member(s) | | Publication date |
|---|---|---|---|---|---|
| WO 2020127358 | A1 | 25-06-2020 | CN | 113382638 A | 10-09-2021 |
| | | | EP | 3897174 A1 | 27-10-2021 |
| | | | WO | 2020127358 A1 | 25-06-2020 |
| EP 1208752 | A1 | 29-05-2002 | AR | 031505 A1 | 24-09-2003 |
| | | | AU | 1909602 A | 03-06-2002 |
| | | | CO | 5280083 A1 | 30-05-2003 |
| | | | EP | 1208752 A1 | 29-05-2002 |
| | | | WO | 0241707 A1 | 30-05-2002 |
| WO 2018167788 | A1 | 20-09-2018 | CA | 3056340 A1 | 20-09-2018 |
| | | | US | 2020085076 A1 | 19-03-2020 |
| | | | WO | 2018167788 A1 | 20-09-2018 |
| WO 2018206622 | A1 | 15-11-2018 | AU | 2018265322 A1 | 10-10-2019 |
| | | | BE | 1024730 B1 | 07-06-2018 |
| | | | BR | 112019023732 A2 | 26-05-2020 |
| | | | CA | 3056991 A1 | 15-11-2018 |
| | | | CL | 2019002921 A1 | 03-01-2020 |
| | | | CN | 110612028 A | 24-12-2019 |
| | | | EP | 3621446 A1 | 18-03-2020 |
| | | | JP | 2020519280 A | 02-07-2020 |
| | | | KR | 20200020664 A | 26-02-2020 |
| | | | US | 2020187520 A1 | 18-06-2020 |
| | | | WO | 2018206622 A1 | 15-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020223623 A
- WO 2019166700 A
- WO 2018167788 A
- US 4119740 A
- US 4296141 A
- US 20120294986 A
- US 9655374 B
- KR 101303459
- EP 3685673 A